# EUROPÄISCHE PATENTSCHRIFT

(11) **EP 1 004 161 B1**
(45) Veröffentlichungstag und Bekanntmachung des Hinweises auf die Patenterteilung: **03.04.2002**
(21) Anmeldenummer: 98947376.4
(22) Anmeldetag: 03.08.1998
(51) Int. Cl.: H02H 3/33

(54) **FEHLERSTROM-SCHUTZEINRICHTUNG**
FAULT-CURRENT PROTECTIVE SWITCHGEAR
DISPOSITIF DE PROTECTION POUR COURANT DE FUITE

(30) Priorität: 14.08.1997 DE 19735412
(43) Veröffentlichungstag der Anmeldung: 31.05.2000
(73) Patentinhaber: SIEMENS AKTIENGESELLSCHAFT, 80333 München (DE)
(72) Erfinder: HARR, Dieter, D-93049 Regensburg (DE)
(86) Internationale Anmeldenummer: DE9802215
(87) Internationale Veröffentlichungsnummer: WO9909629

(56) Entgegenhaltungen:
- DE-A- 3 718 183
- DE-A- 3 823 099

## Beschreibung

Die Erfindung bezieht sich auf eine Fehlerstrom-Schutzeinrichtung.

Eine Fehlerstrom-Schutzeinrichtung dient zur Sicherstellung des Schutzes gegen einen gefährlichen Fehlerstrom in einer elektrischen Anlage. Ein solcher Fehlerstrom tritt auf, wenn ein spannungsführendes Leitungsteil einen elektrischen Kontakt nach Masse aufweist. Dies ist beispielsweise dann der Fall, wenn eine Person ein spannungsführendes Teil einer elektrischen Anlage berührt oder in der Anlage ein Isolationsfehler auftritt. Der Fehlerstrom fließt dann über die Person als Körperstrom bzw. in der Anlage als Fehlerstrom nach Masse ab. Die zum Schutz gegen gefährliche Körperströme eingesetzte Fehlerstrom-Schutzeinrichtung muß dann bei einem Fehlerstrom, der größer als der Nennfehlerstrom, beispielsweise 30 mA für Personenschutz und 200 mA für Anlagenschutz, ist, sicher und schnell die elektrische Anlage vom Netz trennen.

Der Aufbau einer Fehlerstrom-Schutzeinrichtung ist beispielsweise aus "etz", Band 107 (1985), Heft 20, Seiten 938 bis 945, bekannt. Dort sind insbesondere in den Bildern 1 bis 3 Prinzipschaltbilder und Funktionsprinzipien einer Fehlerstrom-Schutzeinrichtung dargestellt. Dabei werden zwei unterschiedliche Grundtypen unterschieden. Der als Fehlerstrom-Schutzschalter bezeichnete FI-Schutzschalter ist eine Fehlerstrom-Schutzeinrichtung, in der die zum Schaltvorgang erforderliche elektrische Leistung netzspannungsunabhängig aus dem Fehlerstrom selbst gewonnen wird. Beim sogenannten Differenzstrom- oder DI-Schutzschalter handelt es sich demgegenüber um eine Fehlerstrom-Schutzeinrichtung, bei der die zum Schaltvorgang erforderliche elektrische Hilfsenergie aus dem Netz entnommen wird. Ein solcher DI-Schalter benötigt somit zu seinem Betrieb einen Netzanschluß sowie ein Netzteil, das die Netzspannung in die zum Betrieb seiner Komponenten erforderliche Versorgungsspannung umwandelt.

Während FI-Schutzschalter ihrem prinzipiellen Aufbau nach nur bei Wechsel- oder Pulsfehlerstrom ein Auslösen des Schutzschalters bewirken können, ist es mit dem DI-Schutzschalter dem Prinzip nach möglich, einen Gleichfehlerstrom zu erfassen und zum Auslösen eines Schutzschalters heranzuziehen. Durch eine Kombination eines FI-Schutzschalters mit einem DI-Schutzschalter ist es damit prinzipiell möglich, eine elektrische Anlage sowohl auf Gleichfehlerstrom als auch auf Wechsel- oder Pulsfehlerstrom zu überwachen. Das Prinzipschaltbild einer solchen sogenannten allstromsensitiven Fehlerstrom-Schutzeinrichtung ist beispielsweise in "etz", Band 115, 1994, Heft 16, Seiten 896-901, dargestellt. Dort ist in Bild 2 zu erkennen, daß ein Auslöser für die Mechanik eines Schutzschalters sowohl mit einer Fehlerstrom-Auslöseschaltung an Wechsel- und Pulsfehlerstrom als auch mit einer Fehlerstrom-Auslöseschaltung für Gleichfehlerstrom angeschlossen ist.

Eine Kombination aus einem DI-Schutzschalter mit einem FI-Schutzschalter ist auch aus der europäischen Patentschrift 0 440 835 bekannt. Der dort zur Kombination mit dem FI-Schutzschalter vorgesehene DI-Schutzschalter umfaßt eine von einem Frequenzgenerator vormagnetisierte Sekundärwicklung eines Summenstromwandlers, wobei zwischen dem Frequenzgenerator und der Sekundärwicklung eine Einrichtung zum Symmetrieren der vom Frequenzgenerator abgegebenen Signalkurven geschaltet ist.

Eine solche Kombination ist aber dann nicht unproblematisch, wenn sogenannte auslösezeitverzögerte FI-Schutzschalter mit einem DI-Schutzschalter für Gleichfehlerstrom kombiniert werden sollen. Ein auslösezeitverzögerter FI-Schutzschalter wird eingesetzt, um Fehlauslösungen durch Schaltspitzen oder Gewitter zu verringern oder um ein selektives Abschalten von Teilen der Anlage zu ermöglichen. Ein solcher stoßstromfester auslösezeitverzögerter FI-Schutzschalter ist beispielsweise in der "Siemens-Zeitschrift", 42. Jahrgamg, Heft 6, 1968, Seiten 492 bis 494, näher erläutert. Dieser bekannte FI-Schutzschalter ist im Sekundärkreis mit einem Gleichrichter und einem parallel zum Auslöser geschalteten Kondensator versehen, der die Auslösezeitverzögerung herbeiführt. Dieser parallel zum Auslöser liegende Kondensator würde dann, wenn eine parallel zu ihm geschaltete Fehlerstrom-Auslöseschaltung eines DI-Schutzschalters ansprechen und den Auslöser mit Strom beaufschlagen wurde, aufgeladen werden, so daß dadurch die Auslösezeit bei glattem Gleichfehlerstrom verlängert werden würde. Dadurch konnen die geforderten Auslösezeitverzögerungen bei Wechsel-, Puls- und glattem Gleichfehlerstrom nicht zusammenpassend und den Vorschriften (VDE, ÖVE, EN, IEC) entsprechend eingehalten werden.

Andererseits ist aus der DE-A-38 23 099 eine Einrichtung zum Schutz vor Fehlerströmen bekannt, bestehend aus einer Kombination aus Fl- und Dl-Schutzschalter,
a) mit einer ersten Fehlerstrom-Auslöseschaltung 1 für Wechsel- und Pulsfehlerstrom,
b) mit einer zweiten Fehlerstrom-Auslöseschaltung 21 für Gleichfehlerstrom,
c) wobei die erste und zweite Fehlerstrom-Auslöseschaltung 1, 21 parallel zueinander an eine Steuerleitung eines Auslösers 5 für einen Schalter 9 angeschlossen sind.

Die erste Untereinrichtung 1 enthält einen Kondensator 7 in Reihe zur Sekundärwicklung 4 eines Summenstromwandlers und zu einem Auslöserelais 5. Damit auch pulsierende Gleichströme zu einer Auslösung führen, ist dieser Schwingkreis wenigstens annähernd auf Resonanz abzustimmen.
Die zweite Untereinrichtung 21 ist mit dem Auslöserelais 5 verbunden und liegt parallel zur Serienschaltung der ersten Untereinrichtung 1, bestehend aus der Sekundärwicklung 4 des Summenstromwandlers und des Kondensator 7.

Der Erfindung liegt nun die Aufgabe zugrunde, eine Fehlerstrom-Schutzeinrichtung anzugeben, bei deren insbesondere eine auslösezeitverzögerte Fehlerstrom-Auslöseschaltung für Puls- oder Wechselstrom mit einer Fehlerstrom-Ausloseschaltung für Gleichfehlerstrom kombiniert werden kann, ohne daß sich die Auslösezeiten und -ströme gegenseitig beeinflussen.

Die genannte Aufgabe wird gemäß der Erfindung gelöst mit den Merkmalen des Patentanspruches 1. Die Fehlerstrom-Schutzeinrichtung gemäß der Erfindung enthält eine mittels eines ausgangsseitig angeordneten Kondensators auslösezeitverzögerte erste Fehlerstrom-Auslöseschaltung für Wechsel- und Pulsfehlerstrom und eine zweite Fehlerstrom-Auslöseschaltung für Gleichfehlerstrom, die parallel zueinander an die Steuerleitung eines Auslösers für einen Schalter angeschlossen sind, wobei erste Mittel zur elektronischen Entkopplung der ersten Fehlerstrom-Auslöseschaltung von der Steuerleitung vorgesehen sind. Durch diese elektronische Entkopplung können sich Auslösezeiten und Auslöseströme der ersten und zweiten Fehlerstrom Auslöseschaltung nicht gegenseitig beeinflussen, so daß bei einer Kombination der beiden Fehlerstrom-Auslöseschaltungen die charakteristischen Daten für die einzelnen Fehlerstrom-Auslöseschaltungen, d.h. der Nennfehlerstrom und die Auslösezeitverzögerung der ihnen jeweils zugeordneten Fehlerstromarten, auch bei Kombination unverändert bleiben.

Das Prinzip der Entkopplung ist bei zwei parallelen Meßkanalen für sich bekannt (DE-A1-37 18 183).

In einer weiteren vorteilhaften Ausgestaltung der Erfindung umfaßt die erste Entkopplungsschaltung eine Diode, mit der die erste Fehlerstrom-Auslöseschaltung an den Auslöser angeschlossen ist. Dadurch ist bei einem Stromfluß im Stromkreis des Auslösers ein Aufladen des zur Auslosezeitverzögerung vorhandenen Kondensators in der ersten Fehlerstrom-Auslöseschaltung vermieden. Dadurch tritt keine unerwünschte Auslösezeitverzögerung für die zweite Fehlerstrom-Auslöseschaltung auf.

Insbesondere umfaßt die erste Entkopplungsschaltung einen parallel zum Kondensator vor die Diode geschalteten Entladewiderstand. Dadurch wird eine vollständige Entladung des Kondensators sichergestellt.

Als Diode ist vorzugsweise eine Schottky-Diode vorgesehen, die eine besonders niedrige Schwellspannung aufweist.

In einer weiteren bevorzugten Ausführungsform ist in der ersten Entkopplungsschaltung ein Schwellwertschalter vorgesehen, der ebenfalls eine Aufladung des Kondensators in der ersten Fehlerstrom-Auslöseschaltung bei ansprechender zweiten Fehlerstrom-Auslöseschaltung verhindert.

In einer besonders vorteilhaften Ausgestaltung der Erfindung ist eine zweite Fehlerstrom-Auslöseschaltung vorgesehen, die ebenfalls auslösezeitverzögert ist, wobei zweite Mittel zur elektronischen Entkopplung der zweiten Fehlerstrom-Auslöseschaltung von der Steuerleitung vorgesehen sind. Durch diese zusätzliche elektronische Entkopplung können sich Auslösezeiten und Auslöseströme auch dann nicht gegenseitig beeinflussen, wenn beide Fehlerstrom-Auslöseschaltungen auslösezeitverzögert sind.

Zur weiteren Erläuterung der Erfindung wird auf die Zeichnung verwiesen. Es zeigen:
- FIG 1: eine Fehlerstrom-Schutzeinrichtung gemäß der Erfindung in einer Prinzipschaltskizze,
- FIG 2 und 3: vorteilhafte Ausgestaltungen einer in der erfindungsgemäßen Fehlerstrom-Schutzeinrichtung vorgesehenen ersten Entkopplungsschaltung.

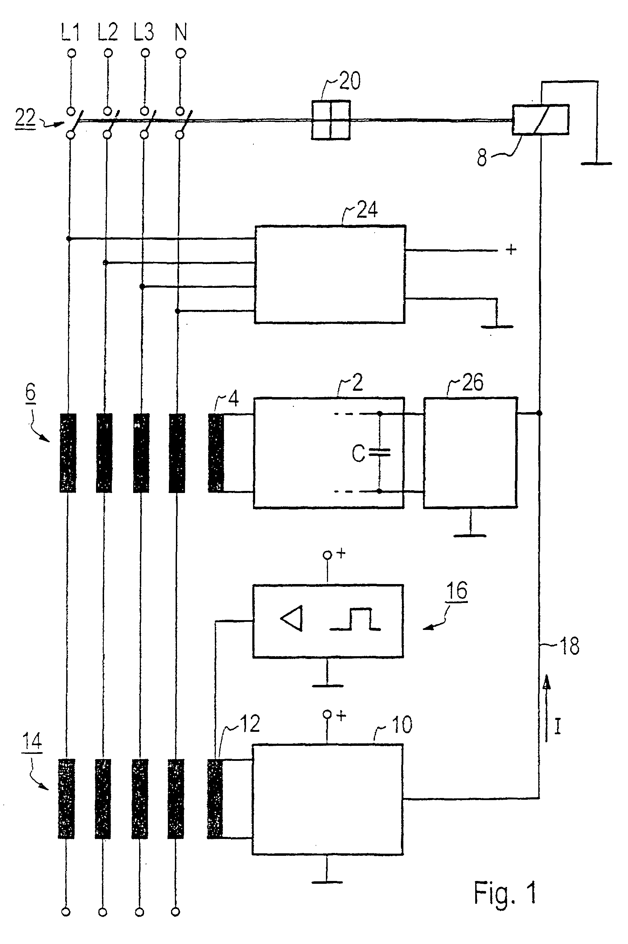

Gemäß FIG 1 umfaßt eine allstromsensitive Fehlerstrom-Schutzeinrichtung eine erste Fehlerstrom-Auslöseschaltung 2, die an die Sekundärwicklung 4 eines ersten Summenstromwandlers 6 angeschlossen ist. Der erste Summenstromwandler 6 dient zur Überwachung eines mehrphasigen Netzes L1, L2, L3, N auf Wechsel- und Pulsfehlerstrom.

Die erste Fehlerstrom-Auslöseschaltung 2 enthält einen nach Masse geschalteten Kondensator C, der zu einer Auslösezeitverzögerung eines von der ersten Fehierstrom-Auslöseschaltung 2 angesteuerten Auslösers 8, beispielsweise eine Spulenwicklung eines Ausiöserelais, dient.

Eine zweite, beispielsweise aus der europäischen Patentschrift 0 440 835 B1 bekannte Fehlerstrom-Auslöseschaltung 10 ist an die Sekundärwicklung 12 eines zweiten Summenstromwandlers 14 angeschlossen und dient zum Auslösen bei Vorliegen eines Gleichfehlerstroms. Der Sekundärwicklung 12 des zweiten Summenstromwandlers 14 ist ein Impulsgenerator 16 zum Vormagnetisieren des Summenstromwandlers 14 zugeschaltet, der mit einer Einrichtung zum Symmetrieren des von ihm an die Sekundärwicklung 12 abgegebenen Signals versehen ist.

Die zweite Fehlerstrom-Auslöseschaltung 10 betätigt über eine Steuerleitung 18 den Auslöser 8, indem sie den zu seiner Auslösung erforderlichen Auslösestrom I treibt. Der Auslöser 8 steht in Wirkverbindung mit einem Schaltschloß 20, mit dem ein Schalter 22 ausgelöst werden kann.

Ein Netzteil 24 dient zur Spannungsversorgung der zweiten Fehlerstrom-Auslöseschaltung 10.

Zwischen der ersten Fehlerstrom-Auslöseschaltung 2 und der zum Auslöser 8 führenden Steuerleitung 18 ist eine erste Entkopplungsschaltung 26 geschaltet, mit der eine Rückwirkung der ersten Fehlerstrom-Auslöseschaltung 2 auf das Auslöseverhalten der zweiten Fehlerstrom-Auslöseschaltung 10 vermieden wird.

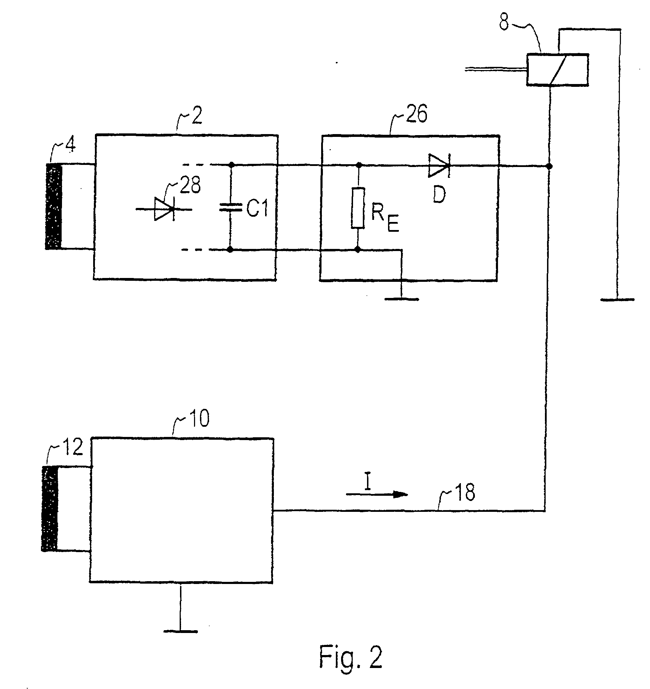

Gemäß FIG 2 enthält die erste Entkopplungsschaltung 26 hierzu eine in Serie zum Ausgang der ersten Fehlerstrom-Auslöseschaltung 2 geschaltete Diode D, mit der verhindert wird, daß der auf der Steuerleitung 18 bei Auslösen der zweiten Fehlerstrom-Auslöseschaltung fließende Auslösestrom I zu einer Aufladung des in der ersten Fehlerstrom-Auslöseschaltung 2 nach Masse geschalteten Kondensators C1 führt. Eine solche Aufladung hätte zur Folge, daß ein Auslösen des Auslösers 8 bei Ansprechen der zweiten Fehlerstrom-Auslöseschaltung 10 zeitlich verzögert ist, wenn die zweite Fehlerstrom-Auslöseschaltung 10 in Kombination mit der ersten Fehlerstrom-Auslöseschaltung 2 ohne Zwischenschaltung einer ersten Entkopplungsschaltung 26 betrieben wird.

Der Diode D ist ein hochohmiger Entladewiderstand R_{E} nach Masse vorgeschaltet, mit dem ein Entladen des Kondensators C1 unter die Schwellspannung der Diode D und ein Wiederherstellen der Anfangsbedingungen sichergestellt ist. Als Diode D ist insbesondere eine Schottky-Diode mit niedriger Schwellspannung und damit niedriger Verlustleistung vorgesehen.

Vorzugsweise sind auch in einem Gleichrichter 28 der ersten Fehlerstrom-Auslöseschaltung 2 Dioden mit niedriger Schwellspannung, ebenfalls insbesondere Schottky-Dioden, vorgesehen, um den durch die Diode D auftretenden Verlust zu verringern und trotz Zuschaltung der Diode D den zum Auslösen des Auslösers 8 erforderlichen Auslösestrom I durch den Auslöser 8 treiben zu können.

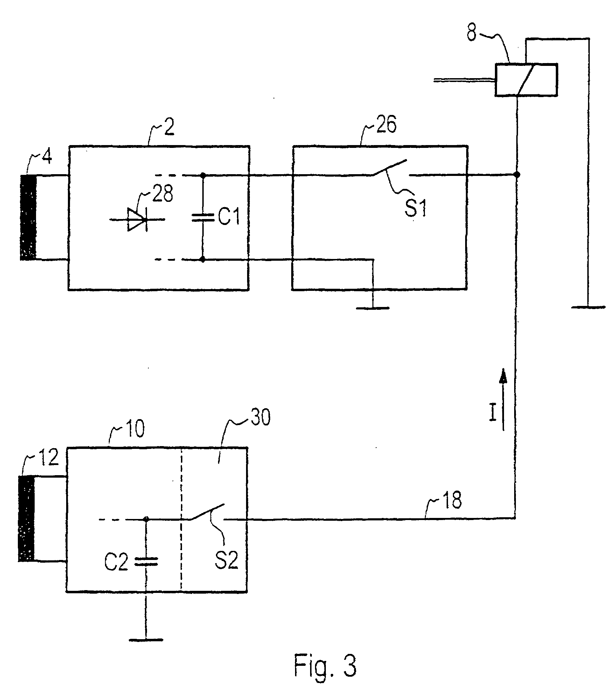

In der Ausgestaltung gemäß FIG 3 enthält die erste Entkopplungsschaltung 26 anstelle der Diode D (FIG 2) einen Schwellwertschalter S1, der im Nichtansprechfall der ersten Fehlerstrom-Auslöseschaltung 2 geöffnet ist. Dadurch ist eine Beeinflussung des Auslöseverhaltens der zweiten Fehlerstrom-Auslöseschaltung 10 durch die Zuschaltung der ersten Fehlerstrom-Auslöseschaltung 2 vermieden.

Die zweite Fehlerstrom-Auslöseschaltung 10 ist vorzugsweise ebenfalls auslösezeitverzögert und enthält zur Auslösezeitverzögerung einen nach Masse geschalteten Kondensator C2 und ist in diesem Fall insbesondere über eine zweite Entkopplungsschaltung 30, im Ausführungsbeispiel ein Schwellwertschalter S2, an die Steuerleitung 18 angeschlossen. Dadurch ist auch eine Beeinflussung des Auslöseverhaltens der ersten Fehlerstrom-Auslöseschaltung 2 durch das Vorhandensein der zweiten Fehlerstrom-Auslöseschaltung 2 vermieden.

## Patentansprüche

1. Fehlerstrom-Schutzeinrichtung mit einer ersten mittels eines ausgangsseitig angeordneten Kondensators auslösezeitverzögerten Fehlerstrom-Auslöseschaltung (2) für Wechsel- und Pulsfehlerstrom, und mit einer zweiten Fehlerstrom-Auslöseschaltung (10) für Gleichfehlerstrom, die parallel zueinander an eine Steuerleitung (18) eines Auslösers (8) für einen Schalter (22) angeschlossen sind, wobei erste Mittel (26) zur elektronischen Entkopplung der ersten Fehlerstrom-Auslöseschaltung (2) von der Steuerleitung (18) derart vorgesehen sind, daß sich Auslösezeiten und Auslöseströme der ersten und der zweiten Fehlerstrom-Auslöseschaltung nicht gegenseitig beeinflussen.

2. Fehlerstrom-Schutzeinrichtung nach Anspruch 1, bei der die erste Entkopplungsschaltung (26) eine Diode (D) umfaßt, mit der die erste Fehlerstrom-Auslöseschaltung (2) an den Auslöser (8) angeschlossen ist.

3. Fehlerstrom-Schutzeinrichtung nach Anspruch 2, bei der die erste Entkopplungsschaltung (26) einen Entladewiderstand (R_{E}) umfaßt, der parallel zum Kondensator (C1) und vor die Diode (D) geschaltet ist.

4. Fehlerstrom-Schutzeinrichtung nach Anspruch 2 oder 3, bei der als Diode (D) eine Schottky-Diode vorgesehen ist.

5. Fehlerstrom-Schutzeinrichtung nach Anspruch 1, bei der die erste Entkopplungsschaltung (26) einen Schwellwertschalter (S1) umfaßt.

6. Fehlerstrom-Schutzeinrichtung nach einem der Ansprüche 1 bis 5, bei der die zweite Fehlerstrom-Auslöseschaltung (10) auslösezeitverzogert ist, wobei zweite Mittel (30) zu ihrer elektronischen Entkopplung von der Steuerleitung (18) vorgesehen sind.

## Claims

1. Residual current device having a first delayed-tripping fault-current tripping circuit (2) which is delay-tripped by means of a capacitor arranged on the output side for alternating and pulsed fault current, and having a second fault-current tripping circuit (10) for direct fault current, which are connected in parallel with one another to a control line (18) of a release (8) for a circuit breaker (22), with first means (26) being provided for electronic decoupling of the first fault-current tripping circuit (2) from the control line (18) such that tripping times and tripping currents of the first and second fault-current tripping circuit do not mutually affect one another.

2. Residual current device according to Claim 1, in which the first decoupling circuit (26) comprises a diode (D), by means of which the first fault-current tripping circuit (2) is connected to the release (8).

3. Residual current device according to Claim 2, in which the first decoupling circuit (26) comprises a discharge resistor (R_{E}) which is connected in parallel with the capacitor (C1) and upstream of the diode (D).

4. Residual current device according to Claim 2 or 3, in which a Schottky diode is provided as the diode (D).

5. Residual current device according to Claim 1, in which the first decoupling circuit (26) comprises a threshold-value switch (S1).

6. Residual current device according to one of Claims 1 to 5, in which the second fault-current tripping circuit (10) has a time delay, with second means (30) being provided to decouple it electronically from the control line (18).

## Revendications

1. Dispositif de protection pour courant de fuite, comprenant un premier circuit (2) de déclenchement pour courant de fuite, dont le déclenchement est ralenti au moyen d'un condensateur disposé du côté de la sortie et qui est destiné à des courants de fuite alternatifs et pulsés et un deuxième circuit (10) de déclenchement pour courant de fuite, qui est destiné à du courant de fuite continu, les deux circuits étant raccordés en parallèle l'un à l'autre sur une ligne (18) de commande d'un déclencheur (8) d'un interrupteur (22), et il est prévu des premiers moyens (26) de découplage électronique du premier circuit (2) de déclenchement pour courant de fuite de la ligne (18) de commande, de manière que des temps de déclenchement et des courants de déclenchement des premier et deuxième circuits de déclenchement pour courant de fuite ne s'influencent pas mutuellement.

2. Dispositif de protection pour courant de fuite suivant la revendication 1, dans lequel le premier circuit (26) de découplage comprend une diode (D), par laquelle le premier circuit (2) de déclenchement pour courant de fuite est relié au déclencheur (8).

3. Dispositif de protection pour courant de fuite suivant la revendication 2, dans lequel le premier circuit (26) de découplage comprend une résistance (R_{E}) de décharge, qui est montée en parallèle au condensateur (C1) et avant la diode (D).

4. Dispositif de protection pour courant de fuite suivant la revendication 2 ou 3, dans lequel il est prévu comme diode (D) une diode de Schottky.

5. Dispositif de protection pour courant de fuite suivant la revendication 1, dans lequel le premier circuit (26) de découplage comprend un interrupteur (S1) à valeur de seuil.

6. Dispositif de protection pour courant de fuite suivant l'une des revendications 1 à 5, dans lequel le deuxième circuit (10) de déclenchement pour courant de fuite est retardé dans le temps du point de vue du déclenchement, des deuxièmes moyens (30) étant prévus pour son découplage électronique de la ligne (18) de commande.
